# NEW EUROPEAN PATENT SPECIFICATION

(11) **EP 0 143 500 B2**
(45) Date of publication and mention of the opposition decision: **05.07.2000**
(45) Mention of the grant of the patent: 22.01.1992
(21) Application number: 84201705.5
(22) Date of filing: 22.11.1984
(51) Int. Cl.: C08F 279/02

(54) **Rubber.reinforced polymers of monovinylidene aromatic compounds having a unique balance of gloss and physical strength properties and a method for their preparation**
Mit Kautschuk verstärkte monovinylaromatische Polymere mit einziger Bilanz von Glanz und Festigkeit und Verfahren zu ihrer Herstellung
Polymères de composés monovinylaromatiques renforcés par du caoutchouc ayant une combinaison unique de brillance et de tenacité, leur méthode de préparation

(30) Priority: 23.11.1983 NL 8304029
(43) Date of publication of application: 05.06.1985
(73) Proprietor: THE DOW CHEMICAL COMPANY, Midland, Michigan 48674 (US)
(72) Inventor: Damen, Julien Helene Joseph Maria, CH-8005 Richterswill (CH)
(74) Representative: Smulders, Theodorus A.H.J., Ir.

(56) References cited:
- DE-A- 2 613 352
- GB-A- 1 180 085
- GB-A- 1 422 208
- GB-A- 2 076 412
- US-A- 3 663 656
- Angewandte Makromolekulare Chemie, vol. 58/59, 1977, pp. 175-198. A. Echte
- Macromolecules, vol. 1, no. 3, 1968, pp. 260-264, G.E. Molau et al.
- Metals and Alloys, vol. 5, june 1934, pp. 139-140, H.A. Schwartz

## Description

The present invention relates to rubber-reinforced polymers of monovinylidene aromatic compounds, particularly to rubber-reinforced polymers having a unique balance of gloss and physical strength properties, and to a method for preparing the rubber-reinforced polymer products.

Rubber-reinforced polymers comprising a continuous matrix phase of a polymer of styrene having discrete particles of a cross-linked rubber, e.g., polybutadiene, dispersed throughout the styrene polymer matrix (conventionally referred to as high impact polystyrene or HIPS) are employed in a variety of commercial applications such as packaging, refrigerator linings, furniture, domestic appliances and toys.

It is often desirable that the high impact polystyrene products employed in many of said commercial applications possess exceptional gloss and/or translucency properties while exhibiting at least a minimum physical properties such as strength or toughness (i.e., the combination of elongation and impact strength). Specifically, it is desirable to prepare a high impact polystyrene which consistently exhibits a gloss of 80 percent or more under various molding conditions while exhibiting at least 2 to 3 times the notched impact strength of pure polystyrene. Heretofore, it has not been possible to prepare rubber-reinforced polystyrene products having such a desired balance of properties.

Specifically, German Patent Application 2,613,352 discloses a process for preparing a high impact polystyrene which is stated to exhibit improved transparency and mechanical properties which substantially correspond to high impact polymers manufactured by conventional processes. The impact strength of these polymers is generally from 10 to 15 times the impact strength of polystyrene. The high impact polystyrenes prepared by the disclosed process comprise disperse rubber particles having a weight average diameter of less than one µm, preferably from 0.2 to 0.6 µm. In the examples, the exemplified high impact polystyrenes are prepared having a particle size generally of at least 0.3 to 0.5 µm. While these exemplified disclosed high impact polystyrene products exhibit relatively good physical strength properties, they do not always exhibit the desired gloss.

Alternatively, E.P. Application No. 0 069 792 discloses transparent impact resistant, styrene containing polymers prepared having a styrene-diene block copolymer dispersed throughout the polystyrene matrix in the form of rods or spheres having diameters of 0.07 µm or less. Although said transparent resins exhibit exceptional gloss when mixed with colorants, the physical strengths, particularly impact strengths, of the products are not sufficiently high for use of the polystyrene products in many applications.

An alternative method for preparing a high impact, rubber-reinforced polystyrene consists of dispersing the rubber throughout the continuous polystyrene matrix as particles having two different sizes (i.e., a bimodal particle size distribution). In general, these rubber-reinforced products exhibit superior physical properties, particularly impact strengths, superior to those of a rubber-reinforced product containing a dispersed rubber phase of a monomodal particle size distribution. Unfortunately, these superior physical properties are achieved at the expense of the gloss properties of the rubber-reinforced product.

In view of the stated deficiencies in rubber-reinforced polystyrene products known in the prior art, it remains highly desirable to provide a rubber-reinforced polystyrene containing rubber having improved gloss properties in combination with sufficient physical strength properties and to a method for preparing said rubber-reinforced polystyrene products.

Accordingly, in one aspect, the present invention is a rubber-reinforced polymer comprising a continuous phase of a polymer consisting essentially of units derived from one or more polymerizable monovinylidene aromatic compounds having discrete particles dispersed throughout the polymer matrix, wherein the discrete rubber particles are formed in a mass-polymerization process, have a shell/core morphology and have a volume average particle size from more than 0.1 to 0.19 µm.

By controlling the size of the rubber particles such that their volume average particle size is from more than 0.1 to 0.19 µm, the rubber-reinforced product exhibits an unexpectedly surprising balance of gloss and physical strength properties. Specifically, a gloss of 80 percent or greater is exhibited by the rubber-reinforced product over a wide range of molding conditions. Moreover, the notched impact strength commonly exceeds the impact strength of pure polystyrene by 2 to 3 times and the elongation at break of the product is at least 5, often 10 to 15 times the elongation at break of pure polystyrene.

In another aspect, the present invention is a method for preparing the described rubber-reinforced polymer product. The method comprises the steps of mass polymerizing a solution of one or more polymerizable monovinylidene aromatic compounds and a rubber at conditions such that upon the phase inversion of the mass polymerization mixture and the subsequent sizing of the rubber the rubber is formed as particles of a shell/core morphology having a volume average particle size of from more than 0.1 to 0.19 µm, wherein these conditions are achieved by bonding sufficient blocks of monovinylidene aromatic polymer to the alkadiene rubber either prior to or simultaneously with the mass polymerization step and by the appropriate modification of the polymerization mixture matching the viscosity of the rubber phase and the viscosity of the continuous phase at phase inversion, subsequently completing the polymerization using either mass or suspension polymerization techniques and thereafter subjecting the polymerization mixture to conditions sufficient to remove the unreacted monomers and to cross-link the polymerized alkadiene of the shell/core rubber particles.

This small particle size is achieved by bonding sufficient blocks of an aromatic polymer to the butadiene in the rubber either prior to or simultaneously with the mass polymerization step and by the modification of the polymerization mixture, e.g., matching the viscosity of the rubber phase and the viscosity of the continuous matrix phase at phase inversion. Specifically, the ratio of the viscosities of the two phases can be adjusted by varying the molecular weight of the polymer of the monovinylidene aromatic compound(s) during the initial phases of polymerization, with sufficiently high molecular weight being desired such that upon phase inversion and subsequent sizing of the rubber, the rubber is readily dispersed throughout the continuous matrix phase as discrete particles having a desirably small particle size.

Following phase inversion and the sizing of the rubber particles, polymerization is completed, using either mass or suspension polymerization techniques, and the polymerization mixture subjected to conditions sufficient to remove the unreacted monomers and to cross-link the rubber. Specifically, using mass polymerization techniques, subsequent to obtaining the desired conversion, the polymerization mixture is subjected to conditions sufficient to remove the unreacted monomers and to cross-link the rubber of a shell-core morphology.

Due to their excellent balance of physical properties, the rubber-reinforced polymers of the present invention are useful in a wide variety of applications, particularly the injection molding of small household appliances such as hair dryers, toys and furniture. The rubber-reinforced polymers are also useful in extrusion applications such as the preparation of a gloss layer using coextrusion techniques.

The rubber-reinforced polymers of the present invention are derived from one or more monovinylidene aromatic compounds. Representative monovinylidene aromatic compounds include styrene, alkyl substituted styrenes such as α -alkyl styrenes (e.g., α-methylstyrene and α-ethylstyrene) and ring substituted styrenes (e.g., vinyl toluene, particularly p-vinyltoluene, o-ethylstyrene and 2,4-dimethylstyrene); ring-substituted halo-styrenes such as chloro-styrene and 2,4-dichlorostyrene; and styrene substituted with both a halo and alkyl group such as 2-chloro-4-methylstyrene, vinyl anthracene and mixtures thereof. In general, the polymer matrix is preferably derived from styrene or a combination of styrene and α -methylstyrene (advantageously from 10 to 50, more advantageously from 15 to 40, weight percent of the α - methylstyrene based on the total weight of the styrene and α -methyl styrene). Most preferably, the polymer matrix is derived from styrene.

The rubber employed in preparing the rubber-reinforced polymers of the present invention is generally a homopolymer or copolymer of an alkadiene having a second order transition temperature of not greater than 0^{o}C, preferably not greater than -20^{o}C, as determined by ASTM Test D-746-52T. Preferred alkadienes are the 1,3-conjugated dienes such as butadiene, isoprene, piperylene and chloroprene.

Although homopolymers of the stated conjugated dienes can be employed, the rubbery component of the mass polymerization mixture at phase inversion will comprise a relatively high amount of a polymer of a monovinylidene aromatic compound being chemically bonded in blocks or as grafted branches to the alkadiene polymer. Therefore, a copolymer of a conjugated diene with a monovinylidene aromatic compound such as styrene is often preferred for use as the rubber in the practice of the present invention. Preferred of such copolymers are block or graft copolymers comprising at least about 55, more preferably from 65 to 85 weight percent, in polymerized form, of the alkadiene, preferably 1,3-butadiene and up to 45, more preferably from 15 to 35, weight percent, in polymerized form, of a monovinylidene aromatic compound, preferably styrene. The preferred copolymers are block copolymers of a monovinylidene aromatic compound and a conjugated diene of the AB(BA)ₙ configuration wherein A represents a block of polymerized monovinylidene aromatic compound and B is a block of polymerized conjugated diene and n is an integer from 0 to 5, most preferably 0.

The rubber is advantageously employed in an amount such that the rubber-reinforced polymer product contains sufficient amounts of the polymerized alkadiene such that the resulting product exhibits a desired balance of gloss and physical strength properties. Specifically, as the amounts of the polymerized alkadiene in the rubber-reinforced polystyrene product increase, the physical strength also increases with a coincident loss in gloss properties. Although the amounts of polymerized alkadiene are therefore dependent on the desired properties of the rubber-reinforced polymer product, in general, the rubber-reinforced polymer product contains from 3 to 25 weight percent of polymerized alkadiene, with from 5 to 15 weight percent of polymerized alkadiene, based on the total weight of the rubber-reinforced polymer, being preferred.

In the rubber-reinforced polymer of the present invention, the rubber is dispersed throughout the polystyrene matrix as discrete particles having a monomodal size distribution with a volume average particle size from more than 0.1 to 0.19 µm and a shell-core type morphology. Preferably, the rubber has a volume average particle size from 0.15 to 0.19 µm. The indicated particle size (diameter) is the diameter of the particles, including all occlusions present in the disperse rubber particles of the rubber-reinforced polymer and is measured using conventional techniques such as electron microscopy techniques.

In the practice of the present invention, the rubber-reinforced polymer is prepared by solubilizing the desired amount of rubber in the monovinylidene aromatic compound(s) and mass polymerizing the resulting solution at conditions sufficient to form rubber particles having the desired particle size and morphology dispersed throughout the polymerized monovinylidene aromatic compound. In general, continuous methods for mass polymerizing the monovinylidene aromatic compound in the monomer/rubber solution are advantageously employed.

The polymerization is preferably conducted in one or more substantially linear stratified flow or so-called plug-flow type reactors such as described in U.S. Patent No. 2,727,884, which may or may not comprise recirculation of a portion of the partially polymerized product. In general, in mass polymerization processes using a plug-flow type reactor, upon initial formation of polymer the initially present polymer comes out of solution and forms a discontinuous phase comprising polymer dissolved in monomer dispersed throughout a continuous phase of the rubber/monomer solution. Eventually, sufficient amounts of the monomer are polymerized and the discontinuous phase becomes a continuous phase with the rubber forming a discontinuous phase dispersed therethrough. This phenomenon is referred to as "phase inversion" which term means generally the conversion of the monovinylidene aromatic polymer from a discontinuous phase dispersed in a continuous phase of the rubber through the point where there is no distinct continuous or discontinuous phase in the polymerization mixture to a continuous polymer phase having the rubber dispersed therethrough.

The particle size and morphology of the rubber in the final rubber-reinforced product are dependent, to a significant extent, on the characteristics of the polymerization mixture at phase inversion and shortly thereafter, particularly, the amounts and molecular weight of polymerized monovinylidene aromatic compound chemically bound to the polymerized alkadiene of the rubber and the viscosities of the monovinylidene aromatic copolymer phase and rubbery component phase at phase inversion. The general manner by which these polymerization characteristics affect the rubber particle size and the morphology of the rubber particles is illustrated in an article entitled "Teilchenbildung bei der Herstellung von Kautschukmodifiziertem Polystyrol" by Adolf Echte, Die Angewandte Makromolekulare Chemie 58/59 (1977) pps-175-198. In this article a review is given of various types of particles. From measurements of the electromicrographs provided therein it can be concluded that the particles have sizes of 0.21 µm and more.

In general, to achieve the desired morphology, the amount of monovinylidene aromatic polymer bonded to the polymerized alkadiene at or near phase inversion (which bonded monovinylidene aromatic polymer includes the monovinylidene aromatic polymer originally present in the rubber as a block or graft and the amounts of monovinylidene aromatic polymer subsequently grafted to the polymerized alkadiene during the polymerization process) is at least 30 percent, by weight, based on the total weight of the polymerized alkadiene and the bound polymerized monovinylidene aromatic compound. Although any suitable method can be employed to measure the amounts of this bound polymer in or grafted on the rubber particles at phase inversion, the amounts of the bound polymer are readily measured by extracting a sample of the polymerization mixture at phase inversion and subsequently determining the monovinylidene aromatic polymer bound to the polymerized alkadiene using selective extraction techniques (e.g., first extracting the free polystyrene with a mixture of methyl ethyl ketone and acetone) and then destroying the rubber backbone of the residual material using OsO₄ (see, G Locatelli and G Ries, Die Angew. Makrom. Chem. 26 (1972), pages 117-127). Preferably, the amount of monovinylidene aromatic polymer bound to the polymerized alkadiene at phase inversion is at least 35, more generally 40, weight percent based on the total weight of the polymerized alkadiene and the monovinylidene aromatic polymer bound thereto when the graft content is measured using the described selective extraction techniques. In general, of the total weight of bound monovinylidene aromatic polymer and the polymerized alkadiene at phase inversion, less than 70, more preferably less than 65, weight percent is the monovinylidene aromatic polymer.

The rubber initially employed in the preparation of the rubber-reinforced product can contain these amounts of bound, monovinylidene aromatic polymer. In this case, it is not necessary to graft additional amounts of monovinylidene aromatic to the polymerized alkadiene although such additional grafting is generally preferred. Therefore, thermal polymerization (i.e., polymerization using no graft promoting initiator), during which little grafting occurs, can be conducted to form the desired particles of rubber. However, in general, it is necessary and/or desirable to graft amounts of the monovinylidene aromatic polymer to the polymerized alkadiene during the initial stage of polymerization in excess of those obtainable using conventional thermal polymerization techniques. In such case, an initiator capable of initiating the polymerization of the monovinylidene aromatic compound(s) and of grafting the polymer to the rubber is employed. Initiators advantageously employed herein are generally free radical type initiators. Representative of such initiators include the peroxide initiators such as the peresters, e.g., tertiarybutyl peroxybenzoate and tertiarybutyl peroxyacetate; dibenzoyl peroxide; dilauroyl peroxide; 1,1-bistertiarybutyl peroxycyclohexane; 1,3-bistertiarybutyl peroxy-3,3,5-trimethylcyclohexane; dicumylperoxide; and photochemical initiators. Although the efficiency of an initiator in promoting the polymer grafting and the initiation of polymerization is dependent on the temperature of polymerization, and the concentrations of the initiator and the rubber, the preferred initiators are generally dibenzoyl peroxide, tertiarybutyl peroxybenzoate, 1,1-bistertiarybutyl peroxycyclohexane and tertiarybutyl peroxyacetate.

The concentration at which the initiator is most advantageously employed is dependent on the specific initiator employed, the desired levels of grafting and the conditions at which the mass polymerization is conducted. In general, in the preferred process for preparing rubber-reinforced polymers wherein the polymerization is conducted in one or more substantially linear flow or plug-flow type reactors, from 50 to 2000, preferably from 100 to 1000, weight parts of initiator are employed per million parts of the aromatic monomer.

The particle size of the disperse rubber particles depends on the shearing (i.e., shearing stress and shear rate) during phase inversion and subsequent thereto until stabilization of the rubber particles; the greater the amount of shear, the lower the particle size. A general description of the effect of shearing on particle size is found in U.S, Patent 3,243,481 and in Freeguard, British Polymer Journal 6 (1974), pps 205-228. The shearing of the polymerization mixture can be achieved by any conventional manner such as by appropriate stirring devices.

In the practice of the present invention, the shear is maintained such that the rubber particles in the rubber-reinforced product exhibit a volume average particle size from more than 0.1-0.19 µm. The shear and/or stirring required to achieve this particle size depends on the particular equipment employed and the characteristics of the polymerization mixture and can be established by those skilled in the art using simple experimentation.

To obtain the desirably small rubber particles using the lowest shear rates, it is advantageous to match the viscosities of the rubber containing phase and monovinylidene aromatic polymer phase at phase inversion. Specifically, it is generally advantageous to adjust the molecular weight of the monovinylidene aromatic polymer so as to adjust the viscosity of the polymeric phase in relation to the viscosity of the rubber phase, e.g., by increasing the molecular weight of the monovinylidene aromatic polymer, thereby increasing the viscosity of the polymeric phase to more closely match this viscosity with that of the rubber phase at phase inversion.

Although the use of an initiator will influence the molecular weight of the monovinylidene aromatic polymer, to obtain a polymer exhibiting a desirable molecular weight it is often necessary to modify one or more other polymerization conditions. For example, the amount and type of chain transfer agent, if any, employed prior to phase inversion affects the molecular weight of the resulting monovinylidene aromatic polymer. For example, increases in molecular weight are obtained by reducing the concentration of the chain transfer agent in the polymerization system. Therefore, in many operations, polymerization is advantageously conducted employing a sufficiently low concentration of a chain transfer agent such that a polymer of a desirably high molecular weight can be prepared. Advantageously, the initial rubber/monomer solution contains no chain transfer agent and any chain transfer agent is added only after phase inversion or, if added prior to phase inversion, only after sufficient amounts of the monomer have been polymerized. Preferably, the polymerization mixture contains no chain transfer agent prior to phase inversion.

A difunctional polymerization initiator, e.g., a diperoxide, can be employed in combination with or as the graft promoting/polymerization initiator to increase the molecular weight of the monovinylidene aromatic polymer. In addition, an increase in the molecular weight of the monovinylidene aromatic polymer can be achieved by reducing the temperatures of polymerization while maintaining the other polymerization conditions constant, e.g., same concentration and activity of polymerization initiator.

Since the conditions at which polymerization is conducted are interrelated, one modification to the polymerization reaction will often require one or more other modifications to obtain the desired rubber-reinforced product. For example, when the polymerization temperatures prior to phase inversion are reduced so as to increase the molecular weight of the aromatic polymer, it is generally necessary to use higher polymerization temperatures following phase inversion to achieve the desired amounts of conversion. These interrelationships in the polymerization conditions and the required modifications in the conditions of polymerization to obtain a desirable product are well known to the skilled artisan and can be determined using simple, experimental techniques.

In addition to the monomer, rubber and initiator, the mass polymerization mixture optionally, but advantageously, contains an organic liquid reaction diluent. Reaction diluents advantageously employed herein include normally liquid organic materials which form a solution with polymerizable monomers and the polymer prepared therefrom and which do not boil at the polymerization conditions employed. Representative organic liquid diluents include aromatic and inertly substituted aromatic hydrocarbons such as toluene, benzene, ethylbenzene and xylene; saturated or inertly substituted, saturated aliphatics having either straight or branched chains of 5 or more carbon atoms such as heptane, hexane or octane; alicyclic or inertly substituted alicyclic hydrocarbons having 5 or 6 carbon atoms such as cyclohexane. Preferred of such organic liquid diluents are the inertly substituted aromatics; with ethylbenzene and xylene being the most preferred. In general, the reaction diluent is employed in amounts sufficient to improve reaction and viscosity control of the polymerization mixture. Such amounts will vary depending on the rubber, monomer and diluent employed; the process equipment and the desired degree of polymerization. In addition, some diluents such as ethylbenzene act, to a limited extent, as a chain transfer agent and this effect must be considered in determining the amounts employed. In general, if employed, the reaction diluent is normally employed at a concentration from 2 to 30 weight percent based on the total weight of the rubber, monomer and diluent.

In general, a plasticizer or lubricant is also often advantageously employed in the preparation of the rubber-reinforced polymers. The plasticizer or lubricant affects the properties of the rubber-reinforced polymer product, e.g., flow and heat resistant properties, and the type and amounts of the plasticizer most advantageously employed are selected accordingly. Representative plastizicers or lubricants include butylstearate, mineral oil or dioctylphthalate. Mineral oil is the most preferred plasticizer. The plasticizer is advantageously employed in concentrations of up to 15 percent, preferably from 1 to 8, more preferably from 1 to 7 weight percent based on the total weight of the rubber-reinforced polymer product. The plasticizer can be added at any intermediate stage of polymerization or with the feed stream of the monomer/rubber solution.

In addition, the mass polymerization mixture may advantageously contain additional materials such as an antioxidant (e.g., an alkylated phenol such as di-tert-butyl-p-cresol or phosphites such as tris-nonylphenyl phosphite) or a mold release agent, e.g., zinc stearate. The mold release agent, if employed, is preferably added only after phase inversion.

The temperatures at which the polymerization is most advantageously conducted are dependent on the specific components, particularly the initiator, employed and will generally vary from 60^{o} to 190^{o}C. In general, polymerization temperatures from 60^{o} to 160^{o} are employed prior to phase inversion with temperatures from 100^{o} to 190^{o}C being employed subsequent to phase inversion. Mass polymerization at such elevated temperatures is continued until the desired conversion of the monomers to polymer is obtained. Generally, conversion of 55 to 90, preferably from 60 to 85, weight percent of the monomers added to the polymerization (i.e., monomer added in the feed and any additional stream, including any recycle stream) to polymer is desirable. Following conversion of a desired amount of monomer to polymer, the polymerization mixture is then subjected to conditions sufficient to cross-link the rubber and remove any unreacted monomer. Such cross-linking and removal of unreacted monomer, as well as any reaction diluent, if employed, and other volatile materials is advantageously conducted in conventional devolatilization techniques, such as introducing the polymerization mixture into a devolatilizing chamber, flashing of the monomer and other volatiles at elevated temperatures, e.g., from 200^{o} to 300^{o}C, under vacuum and removing them from the chamber.

As an alternative to a continuous mass polymerization process to obtain the desired rubber-reinforced product, a combination of mass and suspension polymerization techniques can be employed. Using said techniques, the polymerization mixture is polymerized in mass until phase inversion and subsequent size stabilization of the particles. The partially polymerized product can then be suspended with or without additional monomer in an aqueous medium which contains a polymerization initiator and the polymerization subsequently completed. The rubber-reinforced copolymer is subsequently separated from the aqueous medium by acidification, centrifugation or filtration. The recovered product is then washed with water and dried.

The following examples are set forth to further illustrate the advantages of the present invention as claimed. In the examples, all parts and percentages are by weight unless otherwise indicated.

### Example 1

A rubber-reinforced polymer of styrene comprising a polystyrene matrix having rubber of a shell/core type morphology is prepared using several plug-flow type reactors essentially as described in U.S.Patent No. 2,727,884. The reactors are connected in series and each reactor is equipped with a variable speed agitator and heating and cooling means. To the top of the first reactor is continuously added a solution comprising 10 percent of a block copolymer rubber of 30 percent polystyrene and 70 percent polybutadiene, 8 percent ethylbenzene, 1.6 percent refined mineral oil, 0.02 percent of tertiary butylperoxybenzoate, a graft promoting initiator and the balance styrene. The polymerzation temperatures are controlled from 115 to 175 ^{o}C and the conditions controlled such that at phase inversion, rubber particles of a shell/core morphology having a desirably small particle size are formed. At the time of phase inversion, the rubbery component comprises more than 40 percent of polystyrene bound to the polybutadiene based on the total weight of the polymerized butadiene and the polystyrene chemically bound thereto. The polymerization is continued until 83 percent of the styrene is converted to polymer. The resulting mixture is then discharged from the base of the last reactor and passed to a devolatilizer where the rubber is further cross-linked and the residual monomer and ethylbenzene are removed from the polymerization mixture and recycled to the polymerization process. This rubber-reinforced polystyrene is designated Sample No. 1

A rubber-reinforced polystyrene product is prepared using the techniques described in preparing Sample No. 1 except that 0.02 percent of a chain transfer agent is added to the stream when the amount of the styrene monomer converted to polymer is 36 percent. The resulting comparative rubber-reinforced polystyrene product is designated Sample E.

### Comparative Example A

A polystyrene (having no rubber reinforcement) is prepared using the techniques described in Example No. 1 except that the initial feed stream contains no rubber. This "general purpose" polystyrene is designated Sample No. A.

### Comparative Example B

A rubber-reinforced polystyrene is prepared using the techniques described in Example No. 1 except that a homopolymer of 1,3-butadiene (Buna^{R} 55 available from Bayer) is employed as the rubber and 0.05 percent of the tert-butylperbenzoate initiator are employed. The rubber-reinforced polystyrene product prepared using these formulations is designated Sample No. B. Due to the fact that there was no polymerized monovinylidene aromatic block in the original rubber and there was not sufficient grafting of the monovinylidene aromatic to the polymerized butadiene prior to phase inversion (i.e., the rubber component is composed of less than 30 percent of polymerized styrene chemically bound to the polybutadiene), the rubber particles formed did not exhibit a shell/core morphology.

### Comparative Example C

A rubber-reinforced polystyrene is prepared using the techniques described in Example No. 1 except that the initial monomer/rubber solution contained 0.1 percent of a chain transfer agent and only 0.012 percent of the tert-butylperoxybenzoate initiator which, at the other polymerization conditions employed, did not give the desired rubber particle size. Specifically, due to the presence of the chain transfer agent in the feed, the viscosity of the polymeric phase at phase inversion was not sufficiently high to allow the formation of the desirably small rubber particles. The rubber-reinforced polystyrene thus prepared is designated Sample No. C.

### Comparative Example D

A rubber-reinforced polystyrene is prepared by the techniques of E.P. Application, Publication No. 0 069 792. The rubber-reinforced polystyrene product is designated Sample No. D.

The particle size and morphology of the disperse rubber phase, the Izod impact strength, gloss, tensile yield and elongation at break of the thus prepared samples are determined. The results are set forth in the accompanying Table.

**TABLE**

| Sample No. | Disperse Rubber Phase (1) | | Total Rubber % | Izod Impact Strength (2) J/m | Gloss %(3) | Elongation At Break, % (4) | Tensile Yield, N/mm² |
|---|---|---|---|---|---|---|---|
| | RPS | Morphology | | | | | |
| 1 | 0.17 | shell/core | 8.5 | 29 | 89 | 13 | 26.9 |
| E* | 0.25 | shell/core | 8.5 | 24 | 79 | 10 | 24.5 |
| A* | - | - | 0 | 5 | 100 | 0.5 | 50 |
| B* | 0.30 | cellular | 8.5 | 20 | 70 | 7 | 25 |
| C* | 0.6 | shell/core | 8.5 | 66 | 66 | 15 | 23.4 |
| D* | 0.06 | rod/sphere | 8.5 | 15 | 95 | 3 | 35 |

| | | | | | | | |
|---|---|---|---|---|---|---|---|
| * Not an example of the present invention. | | | | | | | |
| (1) The disperse rubber phase is characterized by its particle size and its morphology. RPS refers to volume average particle size of the rubber particles in µm. Rubber particle size is determined using transmission electron microscopy. The morphology of the rubber particles is determined by visual inspection with characterization being made with reference to the classifications set forth in "Teilchenbildung bei der Herstellung von kautschukmodifiziertem Polystyrol" by Adolf Echte 58/59 (1977), pps 175-198. Percent total rubber is the amount of the polymerized butadiene in the final rubber-reinforced polystyrene product. | | | | | | | |
| (2) Izod impact is notched Izod impact expressed in Joules/meter (J/m), measured on basic state test specimens prepared using the methods described in International Standard 2897/2 and the test methods specified therein. | | | | | | | |
| (3) Gloss is measured using ASTM Test Method D523-80, 60° on a sample having dimensions of 10 cm x 10 cm x 2 mm which has been injection molded at a mold temperature of 29°C and a melt temperature of 215°C. The mold employed is a smooth surface mold having surface roughness factor 0.02. To prepare the test specimen the rubber-reinforced polymer is injected at an injection pressure which is increased until a flash molding appears and then reduced to a pressure such that no excess material (flash molding) appears. The injection pressure at that point is employed. The gloss is measured 3.5 cm from the side of the sample opposite the point of injection in the middle of the sample width. | | | | | | | |
| (4) Elongation and tensile yield are determined on basic state test specimens prepared, using techniques described by International Standard 2897/2 and the test methods specified therein. | | | | | | | |

As evidenced by the data in the foregoing Table, the rubber-reinforced polystyrene products of the present invention wherein the disperse rubber particles have a volume average particle size of from more than 0.1 to 0.19 µm and a shell/core morphology, exhibit an exceptional and unique balance of gloss and physical strength properties.

## Claims

1. A rubber-reinforced polymer comprising a continuous phase of a polymer consisting essentially of units derived from one or more polymerizable monovinylidene aromatic compounds having discrete particles dispersed throughout the polymer matrix, wherein the discrete rubber particles are formed in a mass polymerization process, have a shell/core morphology and have a volume average particle size from more than 0.1 to 0.19 µm.

2. The rubber-reinforced polymer of claim 1 wherein the rubber-reinforced polymer contains from 3 to 25 wt.% of polymerized alkadiene based on the total weight of the rubber-reinforced polymer.

3. The rubber-reinforced polymer of claim 1 wherein the rubber-reinforced polymer contains from 5 to 15 wt.% of polymerized alkadiene based on the total weight of the rubber-reinforced polymer and the disperse rubber particles have a volume average particle size of from 0.15 to 0.19 µm.

4. A method for preparing the rubber-reinforced polymer product of claim 1, the method comprising the steps of mass polymerizing a solution of one or more polymerizable monovinylidene aromatic compounds and a rubber at conditions such that upon the phase inversion of the mass polymerization mixture and the subsequent sizing of the rubber the rubber is formed as particles of a shell/core morphology having a volume average particle size of from more than 0.1 to 0.19 µm, wherein these conditions are achieved by bonding sufficient blocks of monovinylidene aromatic polymer to the alkadiene rubber either prior to or simultaneously with the mass polymerization step and by the appropriate modification of the polymerization mixture matching the viscosity of the rubber phase and the viscosity of the continuous phase at phase inversion, subsequently completing the polymerization using either mass or suspension polymerization techniques and thereafter subjecting the polymerization mixture to conditions sufficient to remove the unreacted monomers and to cross-link the polymerized alkadiene of the shell/core particles.

## Patentansprüche

1. Kautschukverstärktes Polymer, enthaltend eine kontinuierliche Phase eines Polymers, bestehend im wesentlichen aus Einheiten, die von einer oder mehreren polymerisierbaren, aromatischem Monovinylidenverbindungen herrühren, mit in der Matrix dispergierten diskreten Teilchen, wobei die diskreten Kautschukteilchen durch ein Blockpolymerisationsverfahren hergestellt werden, mit einer Hülle/Kern-Morphologie und mit einer volumenmittleren Teilchengröße von mehr als 0,1 bis 0,19 µm.

2. Kautschukverstärktes Polymer nach Anspruch 1, dadurch gekennzeichnet, daß das kautschukverstärkte Polymer von 3-25 Gew.-% polymerisiertes Alkadien, bezogen auf Gesamtgewicht des kautschukverstärkten Polymers, enthält.

3. Kautschukverstärktes Polymer nach Anspruch 1, dadurch gekennzeichnet, daß das kautschukverstärkte Polymer von 5-15 Gew.-% polymerisiertes Alkadien, bezogen auf Gesamtgewicht des kautschukverstärkten Polymers, enthält und die dispergierten Kautschukteilchen eine volumenmittlere Teilchengröße von 0,15-0,19 µm aufweisen.

4. Verfahren zum Herstellen des kautschukverstärkten Polymerproduktes nach Anspruch 1 durch die Schritte des Blockpolymerisierens einer Lösung von einer oder mehreren polymerisierbaren, aromatischen Monovinylidenverbindungen und eines Kautschuks unter Bedingungen, so daß bei Phasenumkehr der Blockpolymerisationsmischung und dem nachfolgenden Kalibrieren des Kautschuks der Kautschuk Teilchen mit einer Hülle/Kern-Morphologie ausbildet mit einer volumenmittleren Teilchengröße von mehr als 0,1 bis 0,19 µm, wobei diese Bedingungen erreicht werden durch Binden ausreichender Blöcke von aromatischem Monovinylidenpolymer an den Alkadienkautschuk entweder vor oder gleichzeitig mit dem Blockpolymerisationsschritt und durch geeignete Modifikation der Polymerisationsmischung, angepaßt an die Viskosität der Kautschukphase und die Viskosität der kontinuierlichen Phase bei Umwandlung, anschließendes Vervollständigen der Polymerisation unter Verwendung entweder von Block- oder Suspensionspolymerisationstechniken und anschließendes Aussetzen der Polymerisationsmischung an Bedingungen, die ausreichen, um nicht umgesetzte Monomere zu entfernen und das polymerisierte Alkadien der Teilchen mit Hülle/Kern-Morphologie zu vernetzen.

## Revendications

1. Polymère renforcé par du caoutchouc comprenant une phase continue d'un polymère constituée essentiellement d'unités dérivées d'un ou de plusieurs composé(s) aromatique(s) polymérisable(s) de monovinylidène contenant des particules séparées dispersées dans toute la matrice de polymère, dans lequel les particules séparées de caoutchouc sont formées par polymérisation en masse, ont une morphologie enveloppe/noyau et ont une dimension moyenne volumique de particules de plus de 0,1 à 0,19 µm.

2. Polymère renforcé par du caoutchouc selon la revendication 1 dans lequel le polymère renforcé par du caoutchouc contient de 3 à 25 % en poids d'alkadiène polymérisé sur la base du poids total de polymère renforcé de caoutchouc.

3. Polymère renforcé par du caoutchouc selon la revendication 1 dans lequel le polymère renforcé par du caoutchouc contient de 5 à 15 % en poids d'alkadiène polymérisé sur la base du poids total du polymère renforcé de caoutchouc et les particules dispersées de caoutchouc présentent une dimension moyenne volumique de particules comprise entre 0,15 et 0,19 µm.

4. Procédé de préparation du polymère renforcé par du caoutchouc selon la revendication 1, le procédé comprenant les étapes consistant à polymériser en masse une solution d'un ou plusieurs composé(s) aromatique(s) polymérisable(s) de monovinylidène et un caoutchouc dans des conditions telles que, lors de l'inversion de phase du mélange de polymérisation en masse et du dimensionnement ultérieur du caoutchouc, le caoutchouc est formé sous forme de particules d'une morphologie enveloppe/noyau d'une dimension moyenne volumique de particules de plus de 0,1 à 0,19 µm, dans lequel ces conditions sont atteintes en liant des blocs suffisants de polymère aromatique de monovinylidène au caoutchouc d'alkadiène soit avant l'étape de polymérisation en masse soit simultanément avec celle-ci et par la modification appropriée du mélange de polymérisation pour accorder la viscosité de la phase de caoutchouc et la viscosité de la phase continue à la phase d'inversion puis compléter la polymérisation en utilisant des techniques de polymérisation soit en masse soit en suspension, et ensuite soumettre le mélange de polymérisation à des conditions suffisantes pour enlever les monomères qui n'ont pas réagi et pour réticuler l'alkadiène polymérisé des particules de caoutchouc enveloppe/noyau.
